# EUROPÄISCHE PATENTANMELDUNG

(11) **EP 0 715 119 A2**
(43) Veröffentlichungstag der Anmeldung: **05.06.1996**
(21) Anmeldenummer: 95117640.3
(22) Anmeldetag: 09.11.1995
(51) Int. Cl.: F17C 9/02

(54) **Verfahren zum Verdampfen von tiefkalten verflüssigten Gasen**

(30) Priorität: 03.12.1994 DE 4443079
(71) Anmelder: MESSER GRIESHEIM GmbH, D-60547 Frankfurt (DE)
(72) Erfinder: Theissen, Friedel, D-41812 Erkelenz (DE); Michel, Friedel, D-40699 Erkrath (DE)

(57) **Zusammenfassung**

Doppelwandige Behälter (10) für tiefkalte verflüssigte Gase sind stets mit einem Isolationsvakuum (13) zwischen dem das verflüssigte Gas aufnehmenden Innenbehälter (12) und dem Außenbehälter (11) versehen. Zum Druckaufbau innerhalb des Behälters wird üblicherweise ein Teil des verflüssigten Gases (14) verdampft. Erfindungsgemäß wird das tiefkalt verflüssigte Gas über die kontrollierte Veränderung des Wirkungsgrades der Isolation verdampft.

## Beschreibung

Die Erfindung betrifft ein Verfahren zum Verdampfen von tiefkalten verflüssigten Gasen nach dem Oberbegriff des Anspruchs 1 und einen Behälter nach dem Oberbegriff des Anspruchs 6.

Behälter für tiefkalte verflüssigte Gase sind stets mit einer aufwendigen Isolierung versehen, um die durch den Wärmeeinfall aus der Umgebung verursachte Verdampfung des verflüssigten Gases gering zu halten. Sie werden deshalb als doppelwandige Behälter ausgeführt, wobei ein das tiefkalte Gas aufnehmender Innenbehälter in einem der Umgebungstemperatur ausgesetzten Außenbehälter gelagert ist. Die Isolierung wird dadurch erreicht, daß der Zwischenraum mit schlecht wärmeleitendem Material, beispielsweise Superisolation, ausgefüllt und nach Fertigstellung der Zwischenraum evakuiert wird.

Um die Wärmeleitung des Gases auf ein Minimum zu reduzieren, sind Hochvakua von 10⁻³ bis 10⁻⁷ mbar erforderlich. Derartige Drücke lassen sich mit Hilfe geeigneter Pumpstände relativ einfach erzeugen. Mikroleckagen, die nach dem Verschließen des Isolationsraumes zu einem Druckanstieg führen würden, begegnet man mit Adsorptions- und/oder Gettermaterialien, die in dem Isolationsvakuum angeordnet sind. Diese Adsorptionsmaterialien besitzen die Eigenschaften bei tiefen Temperaturen selbst im Vakuum große Mengen von Gasmolekülen durch Sorption zu binden. Sie sorgen somit dafür, daß im Betriebszustand, d. h. bei kaltem Innenbehälter, der Partialdruck der Permanentgase im Isolationsraum auch nach mehreren Jahren Lebensdauer der Behälter ausreichend niedrig ist.

Die Adsorptionsmaterialien adsorbieren allerdings im Hochvakuum nur sehr wenig Wasserstoff. Bekanntlich enthalten jedoch viele Metalle größere Mengen gelösten Wasserstoffs. Im Isolationsraum bildet sich somit über längere Zeit ein deutlich spürbarer H₂-Partialdruck. Um den Wasserstoff aus dem evakuierten Raum zu entfernen, werden zusätzlich zu den Adsorptionsmaterialien chemische Getter verwendet. Damit diese Getter nicht durch Permanentgase unwirksam werden, wird vorzugsweise ein wasserstoffselektives Material, z. B. Palladiumoxid, eingesetzt.

Zur Entnahme des tiefkalt verflüssigten Gases aus dem Behälter wird oberhalb des Flüssigkeitsniveaus ein Druck aufgebaut, der dafür sorgt, daß das verflüssigte Gas durch eine rohrförmige Entnahmeleitung strömt. Der Druckaufbau wird üblicherweise durch Verdampfen eines Teils des verflüssigten Gases vorgenommen. Die Wärmezufuhr erfolgt zum Beispiel durch innere Beheizung oder über Druckzusatzverdampfer etc. In der US-PS 3,648,018 ist eine Lösungsmöglichkeit dargestellt, die eine am Entnahmeheber isoliert angebrachte Heizung vorsieht.

Der vorliegenden Erfindung liegt die Aufgabe zugrunde, ein Verfahren zum Verdampfen von tiefkalten verflüssigten Gasen, die in einem isolierten Behälter gespeichert sind, zu schaffen, bei dem die zum Verdampfen benötigte Wärmezufuhr den tiefkalten verflüssigten Gasen vereinfacht zugeführt werden kann.

Ausgehend von dem im Oberbegriff des Anspruches 1 berücksichtigten Stand der Technik, ist diese Aufgabe gelöst mit den im kennzeichnenden Teil des Anspruches 1 angegebenen Merkmalen.

Vorteilhafte Weiterbildungen der Erfindung sind in den Unteransprüchen angegeben.

Durch die Erfindung wird die Verdampfung eines Teils des verflüssigten Gases durch kontrollierte Veränderung des Wirkungsgrades der Isolation vorgenommen. Die Isolation dient somit nicht ausschließlich der Verhinderung der Wärmeeinströmung in das tiefkalte verflüssigte Gas, sondern auch zum Verdampfen eines Teils des verflüssigten Gases und damit zum Druckaufbau im Innenbehälter. Die Wärmezufuhr erfolgt direkt über die gesamte Behälteroberfläche. Eine im Betriebszustand, das heißt bei kaltem Innenbehälter, eine Wärmebrücke darstellende Heizungsdurchführung in den Innenbehälter kann somit entfallen. Vorteilhaft wird durch die Erfindung die Beheizung über die gesamte Oberfläche vorgenommen und es werden keine Durchführungen in den Innenbehälter benötigt.

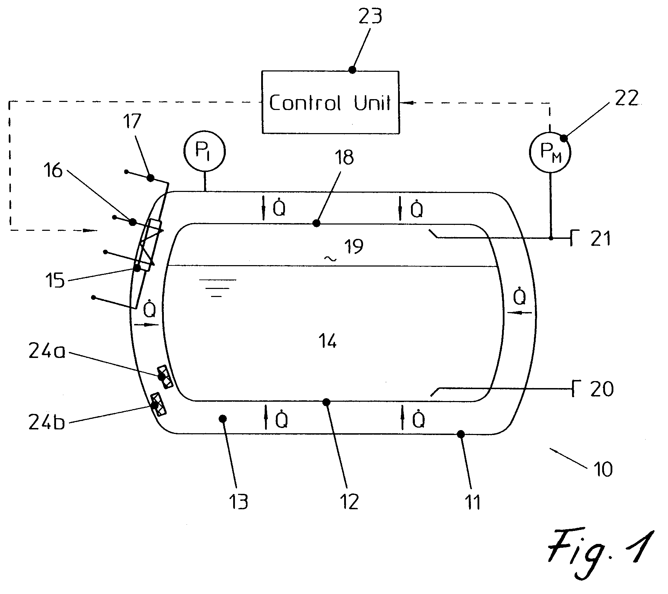

Ein Ausführungsbeispiel der Erfindung ist in der Zeichnung schematisch dargestellt. Die Zeichnung zeigt einen üblichen doppelwandigen Behälter, wie er für die Speicherung tiefsiedender verflüssigter Gase, wie zum Beispiel LH₂, LN₂, LNG etc. verwendet wird. Der doppelwandige Behälter 10 besteht aus einem Innenbehälter 12, in dem das tiefsiedende verflüssigte Gas gespeichert ist und einem Außenbehälter 11. Der Außenbehälter 11 umgibt den Innenbehälter 12 unter Bildung eines Zwischenraumes 13. Entnahmeeinrichtungen 20 für die Entnahme der tiefkalten Flüssigkeit und/oder Entnahmeeinrichtungen 21 für die Entnahme eines tiefkalten Gasstromes sind von dem Außenbehälter 11 in den Innenbehälter 12 geführt. Die Temperatur des tiefsiedenden verflüssigten Gases 14 beträgt bei LN₂-196°C, während der Außenbehälter 11 in der Umgebungstemperatur von beispielsweise 20°C angeordnet ist. Wegen der großen Temperaturdifferenz zwischen Umgebung und dem tiefsiedenden verflüssigten Gas und der Verdampfungswärme des tiefsiedenden verflüssigten Gases, ist der Zwischenraum 13 zwischen Innen- und Außenbehälter evakuiert und mit einem Isoliermaterial, beispielsweise Superisolation oder Perlite, gefüllt.

Zur Entfernung der Restgase aus dem Isolationsvakuum enthält der evakuierte Raum Adsorptions- und/oder Gettermaterialien 24a/24b, die eine ausreichend lange Vakuumstandzeit gewährleisten.

Erfindungsgemäße enthält der Kryobehälter 10 noch ein reversibles H₂-Getter 15 zur Variation des Vakuumdruckes. Neben dem Getter 15 können keine Materialien eingesetzt werden, die ihrerseits Wasserstoff ad- oder absorbieren. Zur Verlängerung der Vakuumstandzeiten können also zusätzlich lediglich wasserstofftransparente Getter 24b, das heißt Getter die keinen Wasserstoff binden, oder Adsorptionsmaterialien 24a, die bei den erforderlichen maximalen Isolationsdrücken kein nennenswertes Adsorptionsvermögen für Wasserstoff besitzen, eingesetzt werden. Allerdings können zur Regelung des Vakuumdruckes H₂-Gettermaterialien 15 gewählt werden, die ihrerseits in der Lage sind, Restgase (N₂, O₂, Ar, OC etc.) aus dem Isolationsvakuum zu binden, ohne ihr reversibles Adsorptionsvermögen für Wasserstoff wesentlich zu beeinträchtigen.

Ein solches Material, das in der Lage ist, Restgase aus dem Isolationsvakuum in begrenztem Umfang zu binden und dabei sein reversibles Adsorptionsvermögen für Wasserstoff behält, ist zum Beispiel das von der Firma Saes vertriebene Produkt ST 707. Ein Gettermaterial, das
eine andere Adsorptions-/Desorptions-Charakteristik für Wasserstoff aufweist, das aber nicht imstande ist, nennenswerte Mengen anderer Gase zu binden und daher vorzugsweise in Kombination mit einem H₂-transparenten Getter verwendet wird, ist zum Beispiel das ebenfalls von
der Firma Saes stammende Material ST 737. Prinzipiell können sämtliche H₂-reversiblen Gettersubstanzen in Kombination mit H₂-transparenten Gettern oder alleine zur Druckregelung in Kryobehältern eingesetzt werden. Die Auswahl des Gettermaterials richtet sich letztendlich nach dem Einsatzzweck des betreffenden Kryobehälters beziehungsweise der Kryokomponente und nach der gewünschten Wasserstoffadsorptions-/-desorptions-Charakteristik.

Das reversible Wasserstoffgetter 15 ist entweder vor dem Einbringen in den Isolationsraum mit einer bekannten Wasserstoffmenge dotiert oder es wird nach dem Evakuieren des Raumes mit der erforderlichen Menge H₂ beladen. In Vakua von p < 1*10⁻⁴ mbar ist das Gettermaterial 15 in der Lage bis ca. 100 mbarl/g oder mehr gasförmigen Wasserstoff bei Umgebungstemperatur (20°C) zu binden. Solange das Gettermaterial nicht über diese Temperatur hinaus erwärmt wird, bleibt der Vakuumdruck zum Beispiel kleiner als 1*10⁻⁴ mbar. Erst durch das Aufheizen der Gettersubstanz auf zum Beispiel 200 bis maximal etwa 600°C, abhängig von der Adsorptions-/Desorptions-Charakteristik des Getters, steigt der Druck im Isolationsraum an.

Die mit Wasserstoff beladene Getter-Substanz 15 wird in den Zwischenraum 13 der Behälter 10 eingebracht und mit einer Getter-Heizung 16 verbunden. Die Kühlung der Getter-Substanz kann durch Wärmeleitung oder über eine zusätzlich eingebaute Zwangskühlung 17 erfolgen. Pro Liter des Zwischenraumes 13 werden 0,01 bis 1 Gramm, vorzugsweise 0,05 bis 0,1 Gramm der Getter-Subsstanz 15 in ein Isolationsvakuum von zum Beispiel 10⁻⁴ mbar eingebracht. Bei einer Beheizung der Getter-Substanz 15 mit Heizung 16 auf maximal 500 bis 600°C wird das Isolationsvakuum von p<10⁻⁴ mbar auf maximal 10 mbar verändert. Bei einem mit Flüssiggas (LNG, LH₂, LN₂, etc.) gefüllten Behälter ergibt das bei einer Umgebungstemperatur von 20°C eine Wärmeeinströmrate von maximal einigen W/m²K, die direkt über die Behälterwand 18 des Innenbehälters 12 in das tiefsiedende verflüssigte Gas 14 gelangt. Die tiefkalte Flüssigkeit verdampft, sammelt sich oberhalb des Flüssigkeitsniveaus 19 und führt zum Anstieg des Arbeitsdruckes P_{M.} Der Arbeitsdruck P_{M} des tiefkalten Gases wird mit dem Sensor 22 erfaßt und an den Eingang der Steuerung 23 gelegt. Die Steuerung 23 regelt die Gettertemperatur und damit den Isolationsdruck P_{I} im Zwischenraum 13. Durch die Beheizung der Getter-Substanz wird somit die Wärmeeinströmung Q̇ zum Innentank 12 und der Arbeitsdruck P_{M} geregelt. Selbstverständlich kann anstelle des Arbeitsdruckes P_{M} auch eine andere Größe, zum Beispiel die Gasentnahmemenge, oder bei Kraftstofftanks das Starten des Motors bzw. eine bliebige vom Kraftstoffverbrauch abhängige Größe zur Regelung der Getterheizung/-kühlung herangezogen werden.

## Patentansprüche

1. Verfahren zum Verdampfen von tiefkalten verflüssigten Gasen, die in einem mit Isolation versehenen Behälter gelagert sind,
dadurch gekennzeichnet,
daß über die kontrollierte Veränderung des Wirkungsgrades der Isolation (13) dem tiefkalt verflüssigten Gas Wärme zugeführt wird.

2. Verfahren nach Anspruch 1,
dadurch gekennzeichnet,
daß der Behälter (10) von einem Isolationsvakuum (13) umgeben ist, dessen Druck (P_{I}) verändert wird.

3. Verfahren nach Anspruch 1 oder 2,
dadurch gekennzeichnet,
daß der Druck (P_{I}) des Isolationsvakuums (13) über die Zugabe oder die Abgabe von Gas in bzw. aus dem Isolationsvakuum gesteuert wird.

4. Verfahren nach einem der Ansprüche 1 bis 3,
dadurch gekennzeichnet,
daß die Zugabe oder Abgabe des Gases im Isolationsvakuum (13) über die Temperaturveränderung einer Getter-Substanz (15) geregelt wird.

5. Verfahren nach einem der Ansprüche 1 bis 4,
dadurch gekennzeichnet,
daß die Getter-Substanz (15) bei Erwärmung Wasserstoffgas desorbiert und beim Abkühlen Wasserstoffgas adsorbiert.

6. Behälter für die Speicherung tiefsiedender verflüssigter Gase, mit einem Isolationsvakuum im dem eine Getter-Substanz angeordnet ist,
dadurch gekennzeichnet,
daß die Getter-Substanz (15) mit einer Heizung (16) verbunden ist und die Heizung (16) an eine Steuerung (23) angeschlossen ist.

7. Behälter nach Anspruch 6,
dadurch gekennzeichnet,
daß ein Eingang der Steuerung (23) mit einem den Arbeitsdruck des verdampften Gases erfassenden Sensor (22) verbunden ist und über die Heizung (16) den Druck des Isolationsvakuums (13) in Abhängigkeit vom Arbeitsdruck des verdampften Gases regelt.
